# EUROPÄISCHE PATENTSCHRIFT

(11) **EP 1 753 967 B1**
(45) Veröffentlichungstag und Bekanntmachung des Hinweises auf die Patenterteilung: **09.03.2011**
(21) Anmeldenummer: 05744951.4
(22) Anmeldetag: 30.04.2005
(51) Int. Cl.: F16D 43/02, F16D 41/10

(54) **RÜCKWIRKUNGSGESCHÜTZTE GETRIEBEBAUEINHEIT UND SPERRKUPPLUNG**
ANTI-REACTIVE MODULAR GEAR UNIT AND LOCKING COUPLING
MODULE DE TRANSMISSION PROTEGE CONTRE UNE REACTION ET ACCOUPLEMENT DE VERROUILLAGE

(30) Priorität: 06.05.2004 DE 102004022368; 13.04.2005 DE 102005016977
(43) Veröffentlichungstag der Anmeldung: 21.02.2007
(73) Patentinhaber: Hans Heidolph GmbH & Co. KG, 93309 Kelheim (DE)
(72) Erfinder: PIRTHAUER, Helmut, 93342 Saal a.d.Donau (DE)
(74) Vertreter: Pfeifer, Hans-Peter
(86) Internationale Anmeldenummer: PCT/EP2005/004695
(87) Internationale Veröffentlichungsnummer: WO 2005/108814

(56) Entgegenhaltungen:
- EP-A- 1 239 178
- DE-A1- 19 809 407
- US-A- 5 036 939
- PATENT ABSTRACTS OF JAPAN Bd. 1995, Nr. 07, 31. August 1995 (1995-08-31) -& JP 07 103260 A (ALPHA SUPPLY KK), 18. April 1995 (1995-04-18) in der Anmeldung erwähnt
- PATENT ABSTRACTS OF JAPAN Bd. 1996, Nr. 12, 26. Dezember 1996 (1996-12-26) & JP 08 200401 A (NTN CORP; NABCO LTD), 6. August 1996 (1996-08-06)

## Beschreibung

Die Erfindung betrifft eine rückwirkungsgeschützte Getriebebaueinheit für einen Motor zum Antrieb einer rückwirkungsgefährdeten Last, umfassend ein Getriebe mit einer Antriebsseite und einer Abtriebsseite und eine Sperrkupplung mit einem Kupplungszustand und einem Sperrzustand umfassend eine Antriebswelle, die an einem Ende Mitnehmerteile aufweist, zwischen denen Klemmkörper beweglich angeordnet sind, die einen Kopf einer Abtriebswelle umgeben, wobei der Kopf der Abtriebswelle Kopplungsflächen aufweist, die im Kupplungszustand mit den Klemmkörpern in Kontakt stehen und über die in dem Kupplungszustand die bei einer Rotation der Antriebswelle von den Mitnehmerteilen mitgenommenen Klemmkörper ein Drehmoment von der Antriebswelle auf die Abtriebswelle übertragen, und wobei ein Bremsring mit einer Klemmfläche um die Klemmkörper herum angeordnet ist, gegen die in dem Sperrzustand die Klemmkörper von den Kopplungsflächen gedrückt werden, wenn ein externes Drehmoment auf die Abtriebswelle wirkt.

Ein Linienkontakt entsteht zwischen den Kopplungsflächen und den Klemmkörpern, indem diese mit unterschiedlich geformten Flächen aneinander anliegen. Wegen unvermeidlicher mikroskopischer Unebenheiten und bei Kontakt auftretenden elastischen oder plastischen Verformungen berührt beispielsweise eine zylindrische Walze eine Ebene nicht nur entlang einer geometrisch exakten, unendlich dünnen Linie, sondern stets entlang eines schmalen Streifens. In diesem Zusammenhang ist das Wort Linienkontakt deshalb gemäß dem technischen Sprachgebrauch nicht einschränkend im Sinne einer idealen geometrischen Linie zu verstehen.

Eine solche Sperrkupplung ist aus der US 4,706,791 bekannt. Mit derartigen Sperrkupplungen kann ein Drehmoment beliebiger Drehrichtung von einer Antriebswelle auf eine Abtriebswelle übertragen werden (Kupplungszustand), während eine übertragung eines Drehmoments von der Abtriebswelle auf die Antriebswelle unterdrückt wird (Sperrzustand). Drehmomente, die von der Antriebswelle auf die Abtriebswelle übertragen werden, werden hier als interne Drehmomente bezeichnet. Drehmomente, die zunächst an der Abtriebswelle angreifen, beispielsweise von einer angetriebenen Last zurückwirkende Drehmomente, werden als externe Drehmomente bezeichnet.

Ferner sind aus der JP 07.103 260 A und der DE 435 561 C Sperrkupplungen mit konkav gekrümmten Kopplungsflächen bekannt.

Aus der EP 1 243 736 A1 ist ein Torantrieb mit einer Sperrkupplung bekannt, die dazu dient, ein unbefugtes Öffnen oder Schließen des Tores zu verhindern. Bei einem unbefugten Öffnen oder Schließen des Tores wirkt auf die Abtriebswelle ein externes Drehmoment, das von der Sperrkupplung unterdrückt wird, so daß das Tor nicht bewegt werden kann. Die verwendete Sperrkupplung kann von Hand in eine herkömmliche, bidirektionale Kupplung umgeschaltet werden, so daß das Tor notfalls von Hand geöffnet werden kann, beispielsweise bei einem Stromausfall oder einem Defekt des Torantriebs.

Durch Stöße oder auch durch Trägheitsmomente abgebremster Lasten können externe Drehmomente entstehen, die über die Abtriebswelle auf einen Antrieb zurückwirken. Antriebseinheiten und Getriebebaueinheiten, bei denen einer solchen Rückwirkung durch eine Sperrkupplung entgegengewirkt wird, werden als rückwirkungsgeschützt bezeichnet. Schäden durch externe Drehmomente, wie sie durch Trägheitskräfte oder Stöße auftreten können, können deshalb bei einer rückwirkungsgeschützten Baueinheit weitgehend verhindert werden.

Idealerweise sollte eine Sperrkupplung spielfrei sein, so daß ein externes Drehmoment nicht einmal zu einer kleinen Bewegung der Antriebswelle führen kann. Tatsächlich haben Sperrkupplungen aber immer ein mehr oder weniger großes Spiel, das dazu führt, daß ein externes Drehmoment unvermeidlicherweise zu einer gewissen Rotationsbewegung der Antriebswelle führt, bevor es von der Sperrkupplung im Sperrzustand aufgenommen werden kann.

Ferner sollte eine Sperrkupplung große externe Drehmomente aufnehmen können, ohne irreversibel in den Sperrzustand überzugehen. Wirken sehr große externe Drehmomente auf die Abtriebswelle ein, so kann dies dazu führen, daß die Klemmkörper so zwischen dem Bremsring und den Kopplungsflächen eingeklemmt werden, daß sie sich anschließend durch eine Bewegung der Antriebswelle nicht mehr aus ihren eingeklemmten Positionen lösen lassen. In einem solchen Fall muß die Sperrkupplung ersetzt oder auseinandergenommen werden.

Bei Sperrkupplungen, wie sie aus der US 4,706,791 bekannt sind, führt eine Reduktion des Spiels; beilspielsweise durch größere Klemmkörper, dazu, daß die Gefahr eines irreversiblen Einklemmens der Klemmkörper zunimmt. Bei vielen Anwendungen muß für einen störungsfreien Betrieb das Risiko eines irreversiblen Einklemmens möglichst gering sein. Aus diesem Grund werden Sperrkupplungen in erster Linie eingesetzt, um relativ selten auftretende Stöße aufzufangen, während trägheitsbedingte externe Drehmomente, die von einer angetriebenen Last zurückwirken, durch motorseitig angeordnete bestromte oder magnetische Bremsen abgefangen werden.

Damit ein unter Umständen mehrere Tonnen schweres Tor im Notfall mit einer Sperrkupplung rasch auf einem Bremsweg von wenigen Zentimetern angehalten werden kann, beispielsweise um ein Einklemmen einer Person zu verhindert, besteht die Forderung nach einem möglichst kleinen Spiel der Sperrkupplung, ohne daß es zu einem irreversiblen Einklemmen der Klemmkörper kommt. Trägheitskräfte des Tores bewirken nach abruptem Abschalten des Antriebs nämlich ein externes Drehmoment, das auf die Abtriebswelle einwirkt und aufgefangen werden muß, um das Tor anzuhalten. In einem solchen Fall ist ein Fachmann deshalb mit dem Problem konfrontiert, zwei gegenläufige Forderungen zu erfüllen, nämlich einem geringen Spiel einerseits und andererseits einem minimalen Risiko eines irreversiblen Verklemmens der Sperrkupplung.

Aufgabe der Erfindung ist es, einen Weg aufzuzeigen, wie ein Antrieb, insbesondere ein Torantrieb, besser vor externen Drehmomenten geschützt werden kann. Dieses Problem stellt sich insbesondere beim Antrieb einer rückwirkungsgefährdeten Last mit großer Masse, wobei beim abrupten Abschalten im Rahmen einer Notbremsung große trägheitsbedingte externe Drehmomente auftreten. Insbesondere ist es Aufgabe der Erfindung, eine Getriebebaueinheit und eine Sperrkupplung zu schaffen, bei der ein irreversibles Einklemmen der Klemmkörper weitgehend ausgeschlossen ist und die ein reduziertes Spiel aufweist.

Diese Aufgabe wird durch eine rückwirkungsgeschützte Getriebebaueinheit mit den im Anspruch 1 angegebenen Merkmalen sowie durch eine Sperrkupplung nach Anspruch 7 gelöst.

Die Kopplungsflächen können konvex geformt sein und mit Klemmkörpern zusammenwirken, die konkave Ausnehmungen haben, in welche der Kopf der Abtriebswelle mit seinen Kopplungsflächen eingreift. Bevorzugt sind die Kopplungsflächen aber konkav geformt, da konkav geformt Kopplungsflächen besonders gut mit zylinderförmigen Klemmkörpern zusammenwirken, die preisgünstig herstellbar sind.

Greift ein externes Drehmoment an die Abtriebswelle einer Sperrkupplung an, so werden die Klemmkörper von den Kopplungsflächen am Kopf der Abtriebswelle radial nach außen gedrückt. Bei der bevorzugt verwendeten Sperrkupplung bewirken die gekrümmten Kopplungsflächen, daß die Klemmkörper bei einem gegebenen Rotationsschritt der Abtriebswelle unter günstigeren geometrischen Bedingungen, d.h. um eine größere Distanz oder mit einer größeren Kraft, radial nach außen gedrückt werden, als dies bei den im Stand der Technik bekannten ebenen Kopplungsflächen der Fall ist. Auf diese Weise kommen bei einer solchen Sperrkupplung die Klemmkörper schon bei einer kleineren Bewegung der Abtriebswelle mit der Klemmfläche des Bremsrings mit einer größeren Anpreßkraft in Kontakt. Folglich hat eine solche Sperrkupplung ein reduziertes Spiel und kann schneller vom Kupplungszustand in den Sperrzustand überwechseln.

Wegen der gekrümmten Kopplungsflächen hat eine derartige Sperrkupplung zudem den Vorteil, daß die Gefahr eines irreversiblen Einklemmens der Klemmkörper zwischen den Kopplungsflächen und der Klemmfläche des Bremsrings wesentlich reduziert ist. Selbst nach einer Einwirkung großer externer Drehmomente auf die Abtriebswelle und einem entsprechend starken Anpressen der Klemmkörper an die Klemmfläche des Bremsrings, kann die bevorzugte Sperrkupplung durch eine gegenläufige Rotationsbewegung der Antriebswelle aus dem Sperrzustand wieder in den Kupplungszustand überführt werden.

Wie bereits erwähnt kann mit Sperrkupplungen ein Antrieb vor externen Drehmomenten geschützt werden, die von einer angetriebenen Last zurückwirken können. Wird z.B. ein elektrischer Torantrieb während einer Schließbewegung eines Tores abrupt abgeschaltet, etwa um ein Einquetschen eines Gegenstandes oder einer Person zu verhindern, so wird durch Trägheitskräfte ein externes Drehmoment erzeugt. Große Garagentore können eine Masse von mehreren Tonnen haben, so daß entsprechend große Trägheitskräfte und dadurch bedingt große externe Drehmomente auftreten können. Zum Schutz eines elektrischen Torantriebs vor solchen externen Drehmomenten kann eine Sperrkupplung eingesetzt werden.

Im Normalfall wird beim Schließen eines Tores der Torantrieb langsam abgefahren, so daß ein Differenzmoment erzeugt wird und der Motor entstehende Trägheitsmomente aufnehmen kann. Bei einer Notbremsung, beispielsweise um das Einquetschen einer Person zu verhindern, müssen jedoch große externe Drehmomente rasch aufgenommen werden. Um einen eingeklemmten Gegenstand oder eine eingeklemmte Person notfalls rasch wieder befreien zu können, muß ein Tor im Anschluß an einer Notbremsung wieder geöffnet werden können. An diesem Beispiel wird deutlich, daß für viele Anwendungen ein irreversibles Verklemmen der Sperrkupplung vermieden werden muß.

Im Allgemeinen nimmt die Gefahr eines irreversiblen Verklemmens einer Sperrkupplung mit der Größe der abzufangenden externen Drehmomente zu. Um ein irreversibles Verklemmen möglichst ausschließen zu können, werden deshalb im Stand der Technik Sperrkupplungen in erster Linie zum Abfangen externer Stöße eingesetzt und zusammen mit einer Bremse zum Aufnehmen größerer Lasten zwischen dem Antriebsmotor und einem nachgeschalteten Getriebe angeordnet.

Bei rückwirkungsgeschützten Baueinheiten nach dem Stand der Technik ist die Antriebswelle der Sperrkupplung an die Motorwelle des Antriebs gekuppelt oder sogar mit ihr identisch, während die Abtriebswelle der Sperrkupplung auf der Antriebsseite des Getriebes mit diesem gekoppelt ist. Eine solche Baueinheit ist aus der US 3,110,381 bekannt. Bei einer solchen Anordnung werden externe Drehmomente durch das Getriebe in wesentlich kleinere Drehmomente übersetzt, bevor sie auf die Abtriebswelle der Sperrkupplung einwirken. Nach Übersetzung durch das Getriebe sind die auftretenden Drehmomente so klein, daß auch bei im Stand der Technik bekannten Sperrkupplungen die Gefahr eines irreversiblen Verklemmens weitestgehend ausgeschlossen ist. Insbesondere da zum Halten großer Lasten oder Auffangen großer trägheitsbedingter externer Drehmomente eine bestromte oder magnetische Bremse dient.

Eine bevorzugt verwendete Sperrkupplung kann, da sie ohne irreversibel zu verklemmen auch große externe Drehmomente aufnehmen kann, im Gegensatz zu anderen Sperrkupplungen auch auf der Abtriebsseite des Getriebes eines Torantriebs angeordnet werden und insbesondere nicht nur stoßbedingte, sondern auch große trägheitsbedingte externe Drehmomente aufnehmen. Auf diese Weise kann bei einer Notbremsung, beispielsweise um das Einquetschen einer Person zu verhindern, der im wesentlichen von dem Spiel der Anordnung bestimmte Bremsweg des Tores erheblich verkürzt werden. Die Anordnung einer Lastsperreinrichtung auf der Abtriebsseite eines Getriebes ist in anderem Zusammenhang, nämlich bei einem Aktuator in einem Fahrzeug-Schaltgetriebe, aus der DE 19809407 A1 bekannt.

Ein wichtiger Aspekt der Erfindung ist deshalb eine rückwirkungsgeschützte Getriebebaueinheit für einen Motor zum Antrieb einer rückwirkungsgefährdeten Last, insbesondere eines Tores, umfassend ein Getriebe mit einer Antriebsseite und einer Abtriebsseite und eine Sperrkupplung, die auf der Abtriebsseite des Getriebes angeordnet ist, so daß ein externes Drehmoment von der Sperrkupplung aufgenommen wird und das Getriebe vor einer Einwirkung des externen Drehmoments geschützt ist.

Eine erfindungsgemäße Getriebebaueinheit ist insbesondere für Anwendungen geeignet, bei denen große Massen schnell gestoppt werden müssen. Da bei einer erfindungsgemäßen Baueinheit das Getriebe vor externen Drehmomenten geschützt ist, muß es auch nicht für die Aufnahme großer externer Drehmomente ausgelegt sein, so daß ein weniger robustes und deshalb kostengünstigeres Getriebe für die Baueinheit verwendet werden kann. Zudem kann auf eine zusätzliche Bremse auf der Antriebsseite verzichtet werden.

Für Anwendungen, bei denen planmäßig ein externes Drehmoment auf die Abtriebswelle der Sperrkupplung einwirkt, beispielsweise wenn eine Last abgesenkt werden soll, ist eine Sperrkupplung bevorzugt, die mindestens ein Rückhalteelement aufweist, das dem Andrücken der Klemmkörper an den Bremsring eine Rückhaltekraft entgegen setzt.

Greift ein externes Drehmoment an die Abtriebswelle einer Sperrkupplung an, so werden die Klemmkörper von den Kopplungsflächen am Kopf der Abtriebswelle radial nach außen gedrückt. Während bei Sperrkupplungen nach dem Stand der Technik hierfür ein beliebig kleines externes Drehmoment ausreicht, muß bei einer erfindungsgemäßen Kupplung von dem externen Drehmoment die Rückhaltekraft der Rückhalteelemente überwunden werden, bevor die Klemmkörper mit ausreichender Kraft gegen den Bremsring gepreßt werden, um die Sperrkupplung in den Sperrzustand zu bringen. Eine erfindungsgemäße Sperrkupplung blockiert deshalb nur bei Einwirkung eines externen Drehmoments, das einen vorgegebenen Schwellenwert übersteigt. Die Größe dieses Schwellenwerts kann durch die Wahl der Rückhalteelemente und die von ihnen aufgebrachte Rückhaltekraft eingestellt werden.

Bei den Rückhalteelementen handelt es sich bevorzugt um Federn, insbesondere Blattfederpakete, deren Federkraft die Klemmkörper von dem Bremsring weg und zu dem Kopf der Abtriebswelle hin drückt. Möglich ist es aber auch, nur ein einziges Rückhalteelement zu verwenden, beispielsweise einen Ring, der um den Kopf der Abtriebswelle und die Klemmkörper herum angeordnet ist, so daß der Ring von den Mitnehmerteilen radial geweitet werden muß, bevor diese mit dem Bremsring in Kontakt treten können.

In anderem Zusammenhang, nämlich zur Erhöhung der Bremswirkung in dem Sperrzustand, ist es beispielsweise aus der GB 2343923 B und der US 3,110,381 bekannt, Federn bei Sperrkupplungen einzusetzen. Im Gegensatz zu der vorliegenden Erfindung sind die Federn dabei aber so angeordnet, daß die Klemmkörper von den Federn zur Erhöhung der Bremskraft gegen den Bremsring gedrückt werden.

Weitere Einzelheiten und Vorteile der Erfindung werden nachfolgend anhand der Figuren näher erläutert. Die darin dargestellten und beschriebenen Besonderheiten können einzeln oder in Kombination verwendet werden, um bevorzugte Ausgestaltungen der Erfindung zu schaffen. Gleiche und einander entsprechende Bauteile verschiedener Ausführungsbeispiele sind mit übereinstimmenden Bezugszahlen bezeichnet. Es zeigen:
- Fig. 1: einen Querschnitt einer Sperrkupplung im Kupplungszustand,
- Fig. 2: einen Querschnitt einer Sperrkupplung im Sperrzustand,
- Fig. 3: eine Detailansicht von Fig. 2,
- Fig. 4: eine erfindungsgemäße Getriebebaueinheit umfassend ein Getriebe und eine Sperrkupplung,
- Fig. 5: ein weiteres Ausführungsbeispiel einer Sperrkupplung und
- Fig. 6: eine Detailansicht von Fig. 5.

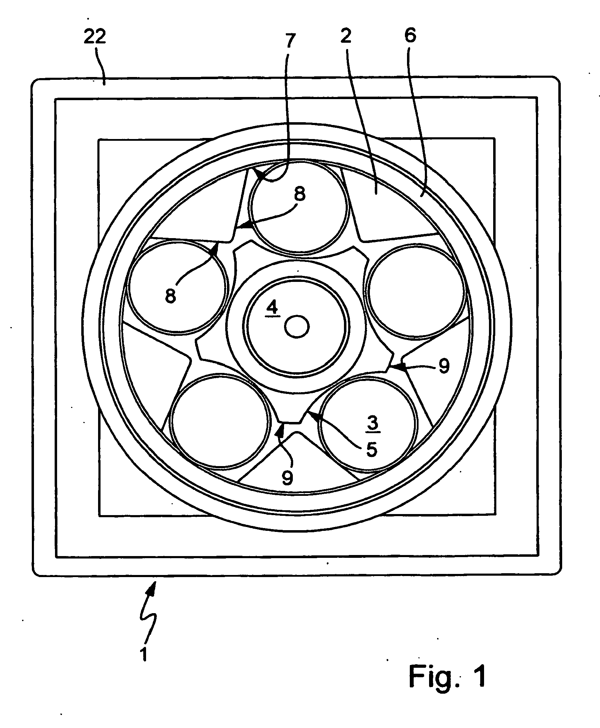

Die in Fig. 1 gezeigte Sperrkupplung 1 umfaßt eine Antriebswelle, die an einem Ende Mitnehmerteile 2 aufweist, zwischen denen Klemmkörper 3 beweglich angeordnet sind. Die Gesamtheit der Mitnehmerteile 2 wird als Krone bezeichnet. Die Klemmkörper 3 umgeben den Kopf 4 einer Abtriebswelle. Der Kopf 4 der Abtriebswelle weist konkav gekrümmte Kopplungsflächen 5 auf, mit denen die Klemmkörper 3 in Linienkontakt stehen. Fig. 1 zeigt die Sperrkupplung in einem quer zu der Antriebswelle und der Abtriebswelle verlaufenden Querschnitt.

In dem in Fig. 1 gezeigten Kupplungszustand wird ein Drehmoment von der Antriebswelle über die Mitnehmerteile 2 auf die Klemmkörper 3 und von diesen über die Kopplungsflächen 5 auf die Abtriebswelle übertragen. Die Klemmkörper 3 und die Kopplungsflächen 5 sind geometrisch so geformt, daß sie sich jeweils nur entlang einer Linie berühren. Das Wort Linie ist hierbei nicht in einem geometrisch exakten Sinn zu verstehen, da sich reale Körper schon wegen elastischen oder plastischen Verformungen selbstverständlich stets entlang eines mehr oder weniger schmalen Streifens berühren. Jedoch sind die Klemmkörper 3 und die Kopplungsflächen so geformt, daß sie sich unter Vernachlässigung unvermeidlicher mikroskopischer Unebenheiten und Verformungen idealerweise nur entlang einer Linie berühren, d.h. in Linienkontakt stehen.

Um die Klemmkörper 3 herum ist ein Bremsring 6 mit einer Klemmfläche 7 angeordnet. Im Kupplungszustand der Sperrkupplung 1 können die Klemmkörper 3 von der Klemmfläche 7 des Bremsrings 6 beabstandet sein oder lose an ihr anliegen, so daß ein Drehmoment mit möglichst geringen Reibungsverlusten von der Antriebswelle auf die Abtriebswelle übertragen werden kann. Um Reibungsverluste zu reduzieren, ist ein von dem Bremsring 6 umgebener Innenraum, in dem die Klemmkörper 3, die Mitnehmerteile 2 und der Kopf 4 der Abtriebswelle angeordnet sind, mit Schmierstoff gefüllt. Der Bremsring 6 ist in das Gehäuse 22 der Sperrkupplung eingepreßt.

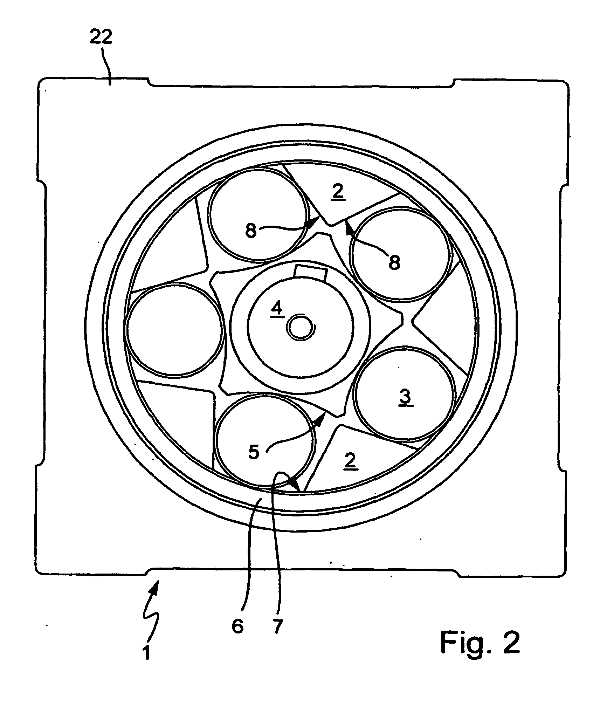

Wenn ein externes Drehmoment auf die Abtriebswelle wirkt, so verdreht sich die Abtriebswelle relativ zur Antriebswelle, wodurch sich die Klemmkörper 3 an den konkav gekrümmten Kopplungsflächen 5 entlang bewegen und gegen die Klemmfläche 7 des Bremsrings 6 gedrückt werden, so daß die Sperrkupplung 1 in den in Fig. 2 gezeigten Sperrzustand übergeht.

Im Sperrzustand wird durch Reibung zwischen den Klemmkörpern 3 und der Klemmfläche 7 des Bremsrings 6 jede Rotationsbewegung gestoppt, so daß ein Drehmoment von der Abtriebswelle nicht auf die Antriebswelle übertragen wird. Je größer das auf die Abtriebswelle wirkende externe Drehmoment ist, desto größer ist die Kraft, mit der die Klemmkörper 3 von dem Kopf 4 der Abtriebswelle gegen die Klemmfläche 7 des Bremsrings 6 gedrückt werden. Auf diese Weise entstehen bei größeren externen Drehmomenten auch größere Reibungskräfte, die einer Rotationsbewegung der Abtriebswelle entgegenwirken.

Durch die konkave Krümmung der Kopplungsflächen 5 wird bewirkt, daß bei einem gegebenen Rotationsschritt der Abtriebswelle relativ zur Antriebswelle die Klemmkörper 3 mit einer größeren Kraft gegen die Klemmfläche 7 gedrückt werden, als dies bei einer ebenen Kopplungsfläche der Fall wäre. Die gezeigte Sperrkupplung 1 weist deshalb ein geringeres Spiel auf, als vergleichbare Sperrkupplungen mit ebenen Kopplungsflächen.

Bei dem gezeigten Ausführungsbeispiel sind die Kopplungsflächen 5 in dem gezeigten senkrecht zur Abtriebswelle verlaufenden Querschnitt kreisbogenförmig. Die Vorteile eines reduzierten Spiels lassen sich aber auch durch andere konkave Krümmungen erreichen, beispielsweise durch elliptische oder parabelförmige Krümmungen.

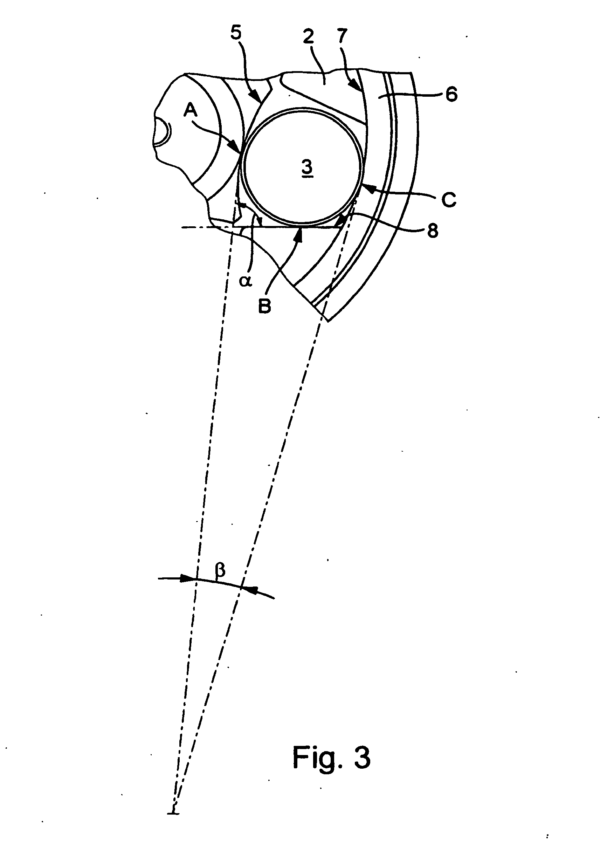

Fig. 3 veranschaulicht die geometrischen Verhältnisse im Sperrzustand anhand einer Detailansicht der Fig. 2.

Ein irreversibles Einklemmen der Klemmkörper 3 zwischen den Kopplungsflächen 5 und der Klemmfläche 7 des Bremsrings 6, also ein irreversibles Übergehen der Sperrkupplung in den Sperrzustand, läßt sich am zuverlässigsten vermeiden, indem die Klemmkörper 3 und die Kopplungsflächen 5 so geformt sind, daß in dem Sperrzustand eine Tangente in dem Berührpunkt A zwischen jeweils einer Kopplungsfläche 5 und dem anliegenden Klemmkörper 3 und eine Tangente in dem Berührpunkt C zwischen diesen Klemmkörper 3 und der Klemmfläche 7 einen Winkel β von mindestens 5,7°, bevorzugt mindestens 7°, besonders bevorzugt mindestens 8° einschließen. Dies wird darauf zurückgeführt, daß diese beiden Tangenten einen sogenannten Reibwinkel einschließen, der für eine Reibung von Stahl auf Stahl bei etwa 5,7° einen kritischen Wert hat, bei dem sich die Gefahr eines irreversiblen Verklemmens sprunghaft erhöht. Die Tangente in dem Berührpunkt A tangiert, wie in Fig. 3 gezeigt, die Kopplungsfläche 5, die Tangente in den Berührpunkt C die Klemmfläche 7.

Um die Gefahr eines irreversiblen Einklemmens der Klemmkörper noch weiter zu reduzieren, ist es günstig, wenn die Mitnehmerteile 2, die Klemmkörper 3 und die Kopplungsflächen 5 so geformt sind, daß eine Tangente in dem Berührpunkt A zwischen jeweils einer Kopplungsfläche 5 und dem anliegenden Klemmkörper 3 und eine Tangente in dem Berührpunkt B zwischen diesem Klemmkörper 3 und einem Mitnehmerteile 2 einem Winkel α von bevorzugt zwischen 60° und 85°, einschließen. Liegt der Klemmkörper 3, wie bei dem gezeigten Ausführungsbeispiel an einer ebenen Mitnehmerfläche 8 an, so ist die Tangente in dem Berührpunkt B eine Verlängerung dieser Mitnehmerfläche 8. In diesem Zusammenhang ist aber zu beachten, daß zwischen den Klemmkörpern 3 und den Mitnehmerflächen 8 auch ein flächiger Kontakt, beispielsweise über konkav gekrümmte Mitnehmerflächen 8, möglich ist. Es sind aber auch größere Winkel α möglich, beispielsweise 120°, jedoch ist dabei zu beachten, daß die Reibung im Kupplungszustand zwischen den Klemmkörpern 3 und dem Bremsring 6 deutlich zunimmt.

Bei dem gezeigten Ausführungsbeispiel sind die Klemmkörper 3 zylindrisch geformt und haben deshalb einen kreisförmigen Querschnitt. Statt dessen können die Klemmkörper aber auch einen von der Kreisform abweichenden Querschnitt haben. Es genügt, wenn die Klemmkörper 3 in jenem Bereich, der mit der Kopplungsfläche 5 des Kopfes 4 der Abtriebswelle in Berührung kommt, anders als die Kopplungsflächen 5 gerundet sind, so daß sich zu den Kopplungsflächen 5 ein Linienkontakt ergibt.

Bei dem gezeigten Ausführungsbeispiel ist jeder Kopplungsfläche 5 genau ein Klemmkörper 3 zugeordnet, d.h. an jeder Kopplungsfläche 5 liegt genau ein Klemmkörper 3 an. Selbstverständlich würde die gezeigte Sperrkupplung 1 - zumindest eingeschränkt - aber auch noch funktionieren, wenn man einen der Klemmkörper 3 entfernen würde. Die Anzahl der Kopplungsflächen 5 und der ihnen zugeordneten Klemmkörper 3 ist in weiten Grenzen, beispielsweise zwischen 3 und 17, frei wählbar. Eine ungerade Anzahl an Klemmkörpern 3 ist dabei bevorzugt, da sich dann keine Klemmkörper 3 genau gegenüberliegen und sich deshalb die Bremswirkung gleichmäßiger auf mehrere Klemmkörper 3 verteilen kann.

Bei dem gezeigten Ausführungsbeispiel sind zwischen den fünf Klemmkörpern 3 fünf Mitnehmerteile 2 angeordnet, mit denen eine Rotationsbewegung der Antriebswelle über die Klemmkörper 3 auf die Abtriebswelle übertragen wird. Die Mitnehmerteile 2 haben den Klemmkörpern 3 zugewandte Mitnehmerflächen 8, die bei dem gezeigten Ausführungsbeispiel eben sind, aber auch konkav gekrümmt sein können.

Die beschriebene Sperrkupplung 1 eignet sich insbesondere für Anwendungen, bei denen große Massen schnell gestoppt oder ohne zusätzlichen Leistungsaufwand große Lasten gehalten werden müssen. Beispiele hierfür sind Torantriebe oder Antriebe von Hebebühnen. Bei solchen Anwendungen müssen externe Drehmomente, wie sie beispielsweise bei einem Abbremsen einer Schießbewegung eines Tores auftreten können, aufgenommen werden.

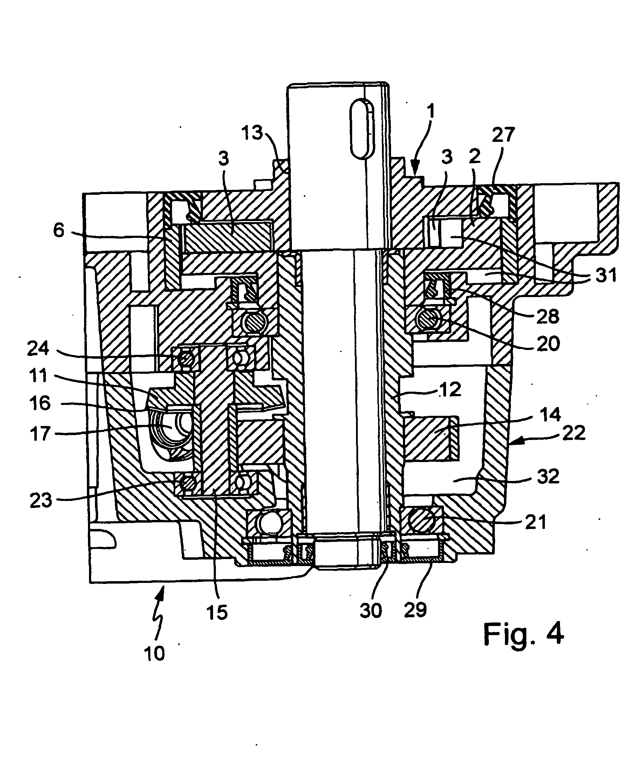

Fig. 4 zeigt in einem Querschnitt eine rückwirkungsgeschützte Getriebebaueinheit 10 zum Schutz eines Torantriebes vor einer lastbedingten Rückwirkung umfassend ein Getriebe 11 mit einer Antriebsseite und einer Abtriebsseite und einer Sperrkupplung 1, wie sie im Vorhergehenden beschrieben ist, wobei die Sperrkupplung auf der Abtriebsseite des Getriebes 11 angeordnet ist, so daß ein externes Drehmoment von der Sperrkupplung 1 aufgenommen wird und die Abtriebsseite des Getriebes 11 vor einer Einwirkung des externen Drehmoments geschützt ist.

In der in Fig. 4 gezeigten Querschnittsansicht der Baueinheit 10 lassen sich die Antriebswelle 12, die Abtriebswelle 13, der Bremsring 6 und zwei Klemmkörper 3 der im Vorhergehenden beschriebenen Sperrkupplung 1 erkennen. Ebenfalls zu sehen ist ein Mitnehmerteil 2 der Krone der Antriebswelle 12. Bei dem gezeigten Ausführungsbeispiel handelt es sich sowohl bei der Antriebswelle 12 als auch bei der Abtriebswelle 13 um Hohlwellen.

Die Antriebs- 12 und Abtriebswelle 13 können beispielsweise ineinander gesteckt sein, um eine Drehmomentübertragung zu ermöglichen, oder nur im Bereich der Klemmkörper 3 in Eingriff stehen. Wichtig ist, daß die Antriebswelle 12 und die Abtriebswelle 13 fluchtend angeordnet sind.

Die Antriebswelle 12 wird von einem Getriebe 11 angetrieben, das bei dem gezeigten Ausführungsbeispiel ein Winkelgetriebe ist, wobei alternativ aber auch Stirnrad, Schnecken-, Planetengetriebe oder Kombinaten solcher Getriebe möglich sind. Zu dem Getriebe gehören ein Rad 14, das die Antriebswelle 12 umgibt und antreibt, eine Ritzelwelle 15 zum Antreiben des Rades 14, ein Kegelrad 16 und ein Kegelritzel 17, mit denen ein Drehmoment einer Motorwelle (nicht gezeigt) auf die Ritzelwelle 15 übertragen werden kann.

Die Antriebswelle 12 ist mit zwei Rillenkugellagern 20,21 drehbar in dem Gehäuse 22 der Baueinheit 10 gelagert. In ähnlicher Weise ist die Ritzelwelle 15 des Getriebes 11 mit Rillenkugellagern 23,24 drehbar gelagert. Selbstverständlich sind an Stelle der Rillenkugellager 20,21,23,24 auch andere Lager möglich.

Das Zusammenfassen von einer Sperrkupplung 1 und einem Getriebe 11 in einer Baueinheit 10 hat den Vorteil, daß nur ein einziges Gehäuse 22 notwendig ist, um sowohl die Sperrkupplung 1 als auch das Getriebe 11 vor schädlichen Umwelteinflüssen, wie Staub und Feuchtigkeit, zu schützen. Damit Staub und Feuchtigkeit nicht in das Innere des Gehäuses 22 eindringen können, sind zwischen der Abtriebswelle 13 und dem Gehäuse 22 ebenso wie zwischen der Antriebswelle 22 und dem Gehäuse 22 Wellendichtringe 27,28,29,30 angeordnet.

Die Wellendichtringe 27 und 28 dichten dabei einen mit Schmierstoff gefüllten Innenraum 31 ab, in dem sich die Klemmkörper 3 befinden. Durch den Schmierstoff werden im Kupplungszustand Reibungsverluste durch an dem Bremsring 6 entlangschleifenden Klemmkörpern 3 reduziert. Die Wellendichtringe 20,21 dichten einen weiteren mit Schmierstoff gefüllten Innenraum 32 ab, in dem sich das Getriebe 11 befindet. Im Prinzip können die Innenräume 31 und 32 als ein verbundener, gemeinsamer Innenraum der Getriebebaueinheit 10 ausgeführt sein. Getrennte Innenräume 31 und 32 können aber mit verschiedenen Schmierstoffen gefüllt werden, die an die unterschiedlichen Bewegungsgeschwindigkeiten und Drehzahlen des Getriebes 11 und der Sperrkupplung 1 angepaßt sind. Beispielsweise kann der Innenraum 31 mit einem Fett und der Innenraum 32 mit einem Öl gefüllt werden.

Tore müssen in einem Notfall zwar rasch gestoppt werden können, werden von dem Torantrieb im allgemeinen aber nur recht langsam bewegt. Deshalb ist die Abtriebswelle 13 der beschriebenen Getriebebaueinheit im Betrieb nur relativ geringen Drehzahlen von maximal 60 Umdrehungen pro Minute ausgesetzt, so daß der Schmierstoff im Kupplungszustand den umlaufenden Klemmkörpern 3 nur einen vernachlässigbaren Reibungswiderstand entgegensetzt. Das Getriebe 11 der Getriebebaueinheit 10 hat eine Übersetzung von 1:50 und ist für einen Elektromotor mit einer Drehzahl von 3000 Umdrehungen pro Minute konstruiert. Um interne Trägheitsmomente anzupassen oder Besonderheiten einer Anwendung Rechnung zu tragen, kann selbstverständlich auch ein Getriebe 11 mit einer anderen Übersetzung oder ein Motor einer anderen Drehzahl eingesetzt werden. Insbesondere ist auch eine Getriebebaueinheit möglich, bei der die Abtriebswelle 13 im Betrieb Drehzahlen von mehreren tausend Umdrehungen ausgesetzt ist

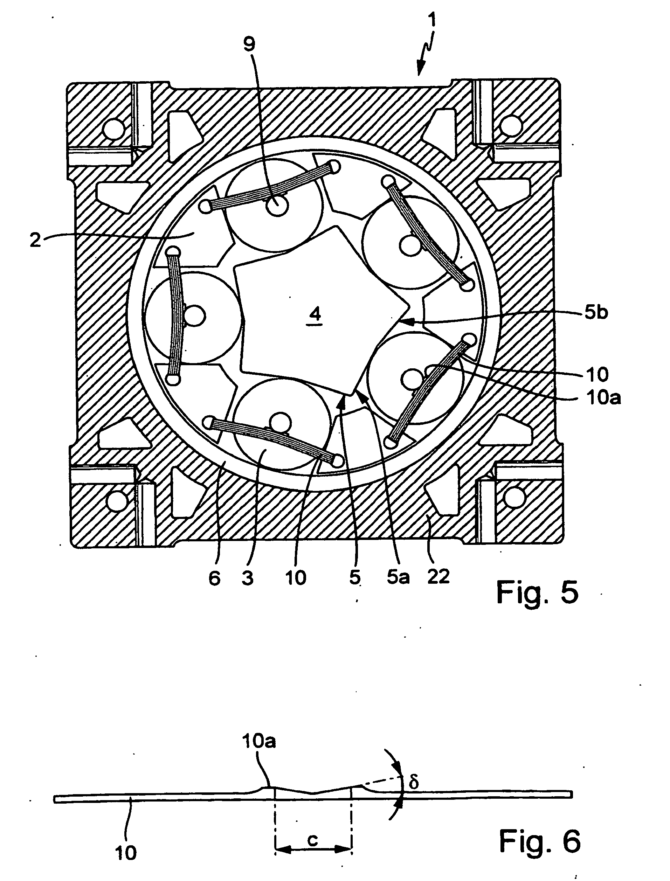

In Fig. 5 ist ein weiteres Ausführungsbeispiel einer Sperrkupplung dargestellt. Die Sperrkupplung 1 weist Rückhalteelemente 10 auf, die einem Anpressen der Klemmkörper 3 an den Bremsring 6 eine Rückhaltekraft entgegensetzen. Bei dem gezeigten Ausführungsbeispiel sind die Rückhalteelemente 10 als Blattfederpakete ausgeführt, die an den Mitnehmerteilen 2 befestigt sind. Die Mitnehmer 3 haben eine Auflage 9 in Form eines zentrisch auf ihren Stirnseiten angeordneten Zapfens, auf den die Rückhalteelemente 10 drücken. Auf diese Weise wird auf die Klemmkörper 3 von den Rückhalteelementen 10 eine Rückhaltekraft ausgeübt, die radial einwärts, d.h. hin zu dem Kopf 4 der Abtriebswelle, gerichtet ist.

Wirkt auf die Abtriebswelle ein externes Drehmoment, so entsteht eine Kraft, welche die Klemmkörper 3 radial nach außen drückt und darauf gerichtet ist, die Abtriebswelle relativ zu der Antriebswelle, d.h. den Kopf 4 gegenüber den Mitnehmerteilen 2, zu verdrehen. Ein externes Drehmoment führt also dazu, daß die Rückhalteelemente 10 belastet werden und eine Kraft entsteht, die der Rückhaltekraft der Rückhalteelemente 10 entgegenwirkt.

Die Rückhaltekraft der Rückhalteelemente 10 gibt bei der gezeigten Sperrkupplung 1 einen Schwellenwert für das externe Drehmoment, von vorzugsweise mindestens 10 Nm, besonders bevorzugt mindestens 25 Nm bei einem Nennmoment des Getriebes 11 von 40 Nm" vor. Wirkt auf die Abtriebswelle ein externes Drehmoment, das kleiner als dieser Schwellenwert ist, so werden die Klemmkörper 3 von der Rückhaltekraft der Rückhalteelemente 10 gegen den Kopf 4 der Abtriebswelle gedrückt. Bei externen Drehmomenten, die den vorgegebenen Schwellenwert übersteigen, wird die Rückhaltekraft der Rückhalteelemente 10 überwunden, so daß die Klemmkörper 3 gegen die Klemmfläche 7 des Bremsrings gedrückt werden. Dabei bewegen sich die Klemmkörper 3 etwas an den konkav gekrümmten Kopplungsflächen 5 entlang, bis durch das Anpressen der Klemmkörper 3 an die Klemmfläche 7 des Bremsrings 6 eine weitere Bewegung des Kopfes 4 der Abtriebswelle gegenüber den Mitnehmern 2 der Antriebswelle verhindert wird und die Sperrkupplung 1 auf diese Weise in den Sperrzustand übergeht.

Im Sperrzustand wird durch Reibung zwischen den Klemmkörpern 3 und der Klemmfläche 7 des Bremsrings 6 jede Rotationsbewegung gestoppt, so daß ein Drehmoment von der Abtriebswelle nicht auf die Antriebswelle übertragen wird. Je mehr das auf die Abtriebswelle wirkende externe Drehmoment einen durch die Rückhaltekraft der Rückhalteelemente 10 vorgegebenen Schwellenwert übersteigt, desto größer ist die Kraft, mit der die Klemmkörper 3 von dem Kopf 4 der Abtriebswelle gegen die Klemmfläche 7 des Bremsrings 6 gedrückt werden. Auf diese Weise entstehen bei größeren externen Drehmomenten auch größere Andruck- und folglich größere Klemmkräfte, die einer Rotationsbewegung der Abtriebswelle entgegenwirken.

Besonders große Rückhaltekräfte und damit höhere Schwellenwerte für das externe Drehmoment lassen sich dadurch erzielen, daß die Rückhalteelemente 10 so angeordnet sind, daß sie in dem Sperrzustand auf Stauchung beansprucht werden. Dies kann beispielsweise durch eine bogenförmige, dem Kopf 4 zugewandte Wölbung der Rückhalteelemente 10 und eine schubfeste Verbindung mit den Mitnehmerteilen 3 erreicht werden.

Die Rückhalteelemente 10 weisen jeweils eine Führung 10a zur Positionierung der Auflage 9 auf. Eine Feder des das Rückhalteelement 10 bildenden Blattfederpaktes ist in der in Fig. 6 gezeigten Detailansicht zusammen mit einer Führung 10a dargestellt. Bei dem gezeigten Ausführungsbeispiel sind die Führungen 10a als Erhöhungen auf den Rückhalteelementen 10 ausgebildet, zwischen denen sich die Auflage 9 der Klemmkörper 3 befindet. Aufgabe der Führung 10a ist es, dafür zu sorgen, daß die Klemmkörper 3 korrekt zwischen den Mitnehmerteilen 2 positioniert sind und sich folglich eine optimale Kraftwirkung der Federkräfte der Rückhalteelemente 10 ergibt.

Bevorzugt ist die Führung 10a so ausgebildet, daß sich die Auflage 9 aus einer zentralen Gleichgewichtslage seitlich bewegen kann, jedoch eine solche Bewegung Rückstellkräfte erzeugt. Bei dem dargestellten Ausführungsbeispiel sind die Führungen 10a deshalb als Erhöhungen ausgebildet, die eine seitliche Bewegung im geringem Maße zulassen. Je weiter sich die Auflage 9 zur Seite bewegt, desto höher liegt die Auflage 9 auf der Führung 10a, so daß das entsprechende Rückhalteelement 10 belastet wird und dessen Federkräfte eine Rückstellkraft in die Gleichgewichtslage erzeugen. Besonders günstig ist, wenn die Führung 10a zwei Teilflächen umfaßt, die mit dem Rückhalteelement 10 einen Winkel δ zwischen 5° und 25°, bevorzugt zwischen 8° und 15°, einschließen.

Ein weiterer Unterschied zwischen den in Figuren 1 und 5 gezeigten Sperrkupplungen besteht in der Form der Kopplungsflächen 5. Während die Kopplungsflächen 5 der in Figur 1 gezeigten Sperrkupplung auf voller Länge kreisbogenförmig geformt sind, sind die Kopplungsflächen 5 der in Figur 5 gezeigten Sperrkupplung in einem mittleren Abschnitt kreisbogenförmig geformt, an den tangential ebene Abschnitte der Kopplungsflächen 5 anschließen. Der kreisförmig geformte Abschnitt der Kopplungsflächen 5 kann dabei sehr klein sein, so daß die mechanischen Eigenschaften der Kopplungsflächen 5 im wesentlichen von den beiden ebenen Abschnitten der Kopplungsflächen 5 bestimmt werden. Durch ebene Teilabschnitte 5a und 5b der Kopplungsflächen 5 läßt sich ebenfalls eine insgesamt konkave Form der Kopplungsflächen 5 mit den im vorhergehenden beschriebenen Vorteilen erreichen. Fertigungstechnisch lassen sich ebene Teilflächen 5a, 5b der Kopplungsflächen 5 wesentlichen leichter erzeugen, als kreisbogenförmig geformte Abschnitte. Bevorzugt sind die Teilflächen 5a, 5b einer Kopplungsfläche 5 zueinander in einem Winkel von 160° bis 175°, insbesondere bevorzugt 165° bis 170° angeordnet.

Bei Kopplungsflächen 5, die ebene Teilflächen 5a, 5b aufweisen, ist es möglich, daß die Klemmkörper 3 in dem Kupplungszustand mit beiden ebenen Teilflächen 5a, 5b jeweils in Linienkontakt stehen. Beim Übergang in den Sperrzustand oder auch bei etwas höherer Belastung im Kupplungszustand, bewegt sich der Klemmkörper 3 auf der Kopplungsfläche 5, so daß er nur noch mit einer der beiden Teilflächen 5a, 5b in Linienkontakt steht.

Die in Fig. 5 dargestellte Sperrkupplung 1 eignet sich insbesondere für Anwendungen, bei denen Lasten gesenkt werden müssen, wie dies beispielsweise bei Hebebühnen der Fall ist. Bei derartigen Anwendungen müssen extreme Drehmomente von der Sperrkupplung nur dann aufgenommen werden, wenn sie einen kritischen Schwellenwert übersteigen.

Die in Figur 5 dargestellte Sperrkupplung 1 wird bevorzugt in Kombination mit einer auf der Motorseite des Getriebes angeordneten Bremse eingesetzt. In einer Baueinheit gemäß Figur 4 wird das Getriebe durch die beschriebene Sperrkupplung vor Stößen geschützt, so daß es keinen externen Drehmomenten oberhalb eines durch die Rückhalteelemente 10 vorgegebenen Schwellenwerts ausgesetzt wird. Durch die motorseitig angeordnete Bremse (nicht gezeigt) wird verhindert, daß beispielsweise bei Hebebühnen oder Kipptoren schwerkraftbedingt auftretende externe Drehmomente, die kleiner als dieser Schwellenwert sind, bei abgeschaltetem Motor zu einem langsamen absinken der Hebebühne bzw. einem Schließen des Kipptores führen.

## Patentansprüche

1. Rückwirkungsgeschützte Getriebebaueinheit für einen Motor zum Antrieb einer rückwirkungsgefährdeten last mit einem Getriebe (11) mit einer Antriebsseite und einer Abtriebsseite und einer Sperrkupplung (1) mit einem Kupplungszustand und einem Sperrzustand,
wobei
die Sperrkupplung eine Antriebswelle (12) einschließt,
die Antriebswelle (12) an einem Ende Mitnehmerteile (2) aufweist, zwischen denen Klemmkörper (3) beweglich angeordnet sind, die Klemmkörper einen Kopf (4) einer Abtriebswelle (13) umgeben, der Kopf (4) der Abtriebswelle (13) Kopplungsflächen (5) aufweist, ein Bremsring (6) mit einer Klemmfläche (7) um die Klemmkörper (3) herum angeordnet ist,
in dem Kupplungszustand die Kopplungsflächen (5) der Abtriebswelle (13) mit den Klemmkörpern (3) in Kontakt stehen, so dass bei einer Rotation der Antriebswelle (12) über die von den Mitnehmerteilen (2) mitgenommenen Klemmkörper ein Drehmoment von der Antriebswelle (12) auf die Abtriebswelle (13) übertragen wird, und
in dem Sperrzustand die Klemmkörper (3) von den Kopplungsflächen (5) gegen die Klemmfläche (7) des Bremsrings (6) gedrückt werden, wenn ein externes Drehmoment auf die Abtriebswelle wirkt,
die Sperrkupplung (1) auf der Abtriebsseite des Getriebes (11) angeordnet ist, so dass ein externes Drehmoment von der Sperrkupplung (1) aufgenommen wird und **dadurch** das Getriebe (11) vor einer Einwirkung des externen Drehmoments geschützt ist, und die Klemmkörper (3) und die Kopplungsflächen (5) so geformt sind, daß in dem Sperrzustand eine Tangente in dem Berührpunkt A zwischen jeweils einer Kopplungsfläche (5) und dem anliegenden Klemmkörper (3) und eine Tangente in dem Berührpunkt C zwischen diesem Klemmkörper (3) und der Klemmfläche (7) einen Winkel β von mindestens 5,7° einschließen.

2. Getriebebaueinheit nach Anspruch 1, bei der das Getriebe (11) und die Sperrkupplung (1) in einem einzigen Gehäuse (12) angeordnet sind.

3. Getriebebaueinheit nach Anspruch 1 oder 2, bei der die Kopplungsflächen (5) eine insgesamt konkave Form haben, wobei vorzugsweise die insgesamt konkaven Kopplungsflächen (5) tangential ebene Abschnitte einschließen.

4. Getriebebaueinheit nach einem der vorhergehenden Ansprüche, bei der die Klemmkörper (3) und die Kopplungsflächen (5) so geformt sind, daß in dem Sperrzustand eine Tangente in dem Berührpunkt A zwischen jeweils einer Kopplungsfläche (5) und dem anliegenden Klemmkörper (3) und eine Tangente in dem Berührpunkt C zwischen diesem Klemmkörper (3) und der Klemmfläche (7) einen Winkel β von mindestens 7° einschließen.

5. Getriebebaueinheit nach einem der vorhergehenden Ansprüche, bei der die Mitnehmerteile (2), die Klemmkörper (3) und die Kopplungsflächen (5) so geformt sind, daß eine Tangente in dem Berührpunkt A zwischen jeweils einer der Kopplungsflächen (5) und dem anliegenden Klemmkörper (3) und eine Tangente in dem Berührpunkt B zwischen diesem Klemmkörper (3) und einem Mitnehmerteil (2) einen Winkel α zwischen 60° und 85°, einschließen.

6. Getriebebaueinheit nach einem der vorhergehenden Ansprüche, bei welcher der Bremsring (6) einen mit Schmierstoff gefüllten Innenraum umgibt, in dem die Klemmkörper (3), die Mitnehmerteile (2) und der Kopf (4) der Abtriebswelle (13) angeordnet sind.

7. Sperrkupplung mit einem Kupplungszustand und einem Sperrzustand, umfassend eine Antriebswelle (12), die an einem Ende Mitnehmerteile (2) aufweist, zwischen denen Klemmkörper (3) beweglich angeordnet sind, die einen Kopf (4) einer Abtriebswelle (13) umgeben,
wobei
der Kopf (4) der Abtriebswelle (13) Kopplungsflächen (5) aufweist, ein Bremsring (6) mit einer Klemmfläche (7) um die Klemmkörper (3) herum angeordnet ist,
in dem Kupplungszustand die Kopplungsflächen (5) der Abtriebswelle (13) mit den Klemmkörpern (3) in Kontakt stehen, so dass bei einer Rotation der Antriebswelle (12) über die von den Mitnehmerteilen (2) mitgenommenen Klemmkörper ein Drehmoment von der Antriebswelle (12) auf die Abtriebswelle (13) übertragen wird, und
in dem Sperrzustand die Klemmkörper (3) von den Kopplungsflächen (5) gegen die Klemmfläche (7) des Bremsrings (6) gedrückt werden, wenn ein externes Drehmoment auf die Abtriebswelle wirkt,
**dadurch gekennzeichnet, daß**
die Sperrkupplung mindestens ein Rückhalteelement (10) aufweist, das dem radial nach außen gerichteten Andrücken der Klemmkörper (3) an den Bremsring (6) eine Rückhaltekraft derart entgegensetzt, dass die Rückhaltekraft der Rückhalteelemente überwunden werden muss, bevor die Klemmkörper mit einer für den Sperrzustand ausreichenden Kraft gegen den Bremsring gepresst werden.

8. Sperrkupplung nach Anspruch 7, **dadurch gekennzeichnet, daß** die Rückhalteelemente (10) jeweils an benachbarten Mitnehmerteilen befestigt sind.

9. Sperrkupplung nach Anspruch 7 oder 8, **dadurch gekennzeichnet, daß** die Rückhalteelemente (10) Federn sind.

10. Sperrkupplung nach Anspruch 9, **dadurch gekennzeichnet, daß** die Federn (10) Blattfedern sind.

11. Sperrkupplung nach Anspruch 10, **dadurch gekennzeichnet, daß** auf jeden Klemmkörper (3) ein Blattfederpaket (10) wirkt.

12. Sperrkupplung nach einem der Ansprüche 7 bis 11, **dadurch gekennzeichnet, daß** die Rückhalteelemente (10) so angeordnet sind, daß sie in dem Sperrzustand auf Stauchung beansprucht werden.

13. Sperrkupplung nach einem der Ansprüche 7 bis 12, **dadurch gekennzeichnet, daß** die Klemmkörper auf mindestens einer Stirnseite, vorzugsweise auf beiden Stirnseiten, eine Auflage (9) aufweisen, über welche die Rückhalteelemente (10) die Rückhaltekraft auf die Klemmkörper (3) ausüben.

14. Sperrkupplung nach Anspruch 13, **dadurch gekennzeichnet, daß** die Rückhalteelemente (10) eine Führung (10a) zur Positionierung der Auflage (9) aufweisen.

15. Verwendung einer Sperrkupplung (1) nach einem der Ansprüche 7 bis 13 für einen Antrieb zum Heben und Senken einer Last.

## Claims

1. Retroaction-protected transmission module for a motor for driving of a retroaction-endangered load, comprising
a transmission (11) having a drive side and an output side and a blocking clutch (1) having a clutch state and a blocking state,
wherein
the blocking clutch includes a driveshaft (12),
the driveshaft (12) has at one end driver parts (2), between which clamping bodies (3) are movably located,
the clamping bodies surround a head (4) of an output shaft (13),
the head (4) of the output shaft (13) has coupling faces (5),
a braking ring (6) having a clamping face (7) is arranged around the clamping bodies (3),
in the clutch state the coupling faces (5) of the output shaft (13) are in contact with the clamping bodies (3) so that during rotation of the driveshaft (12) a torque is transmitted from the driveshaft (12) to the output shaft (13) via the clamping bodies carried by the driver parts (2), and
in the blocking state the clamping bodies (3) are pressed by the coupling faces (5) against the clamping face (7) of the braking ring (6) when an external torque acts on the output shaft,
the blocking clutch (1) is arranged on the output side of the transmission (11) so that an external torque is absorbed by the blocking clutch (1) whereby the transmission (11) is protected from the effect of the external torque, and
the clamping bodies (3) and the coupling faces (5) are shaped so that, in the blocking state, a tangent in the contact point A between one of the coupling faces (5) and the adjoining clamping body (3) and a tangent in the contact point C between this clamping body (3) and the clamping face (7) enclose an angle β of at least 5.7°.

2. Transmission module according to Claim 1, wherein the transmission (11) and the blocking clutch (1) are located in a single housing (12).

3. Transmission module according to Claim 1 or 2, wherein the coupling faces (5) have a generally concave shape, the generally concave coupling faces (5) preferably comprising tangentially planar sections.

4. Transmission module according to any one of the preceding claims, wherein the clamping bodies (3) and the coupling faces (5) are so shaped that, in the blocking state, a tangent in the contact point A between one of the coupling faces (5) and the adjoining clamping body (3) and a tangent in the contact point C between this clamping body (3) and the clamping face (7) enclose an angle β of at least 7°.

5. Transmission module according to any one of the preceding claims, wherein the driver parts (2), the clamping bodies (3), and the coupling faces (5) are shaped so that a tangent in the contact point A between one of the coupling faces (5) and the adjoining clamping body (3) and a tangent in the contact point B between this clamping body (3) and a driver part (2) enclose an angle α between 60° and 85°.

6. Transmission module according to any one of the preceding claims, wherein the braking ring (6) encloses an inner chamber filled with lubricant, in which the clamping bodies (3), the driver parts (2), and the head (4) of the output shaft (13) are located.

7. Blocking clutch having a clutch state and a blocking state, the clutch comprising a driveshaft (12) having at one end thereof driver parts (2) between which clamping bodies (3) are movably located, the clamping bodies surrounding a head (4) of an output shaft (13),
wherein
the head (4) of the output shaft (13) has coupling faces (5),
a braking ring (6) having a clamping face (7) is arranged around the clamping bodies (3),
in the clutch state the coupling faces (5) of the output shaft (13) are in contact with the clamping bodies (3) so that during rotation of the driveshaft (12) a torque is transmitted from the driveshaft (12) to the output shaft (13) via the clamping bodies being carried by the driver parts (2), and
in the blocking state the clamping bodies (3) are pressed by the coupling faces (5) against the clamping face (7) of the braking ring (6) when an external torque acts on the output shaft,
**characterized in that**
the blocking clutch has at least one retention element (10), which exerts a retention force against the clamping bodies (3) pressed radially outwardly towards the braking ring (6), in such a manner that the retention force of the retention elements must be overcome before the clamping bodies are pressed against the braking ring by a force which is high enough for the blocking state.

8. Blocking clutch according to Claim 7, **characterized in that** the retention elements (10) are each attached to neighboring driver parts.

9. Blocking clutch according to Claim 7 or 8, **characterized in that** the retention elements (10) are springs.

10. Blocking clutch according to Claim 9, **characterized in that** the springs (10) are leaf springs.

11. Blocking clutch according to Claim 10, **characterized in that** a leaf spring packet (10) acts on every clamping body (3).

12. Blocking clutch according to any one of Claims 7 to 11, **characterized in that** the retention elements (10) are arranged in such a manner that they are, in the blocking state, stressed by compression.

13. Blocking clutch according to any one of Claims 7 to 12, **characterized in that** the clamping bodies have a support (9) on at least one front face, preferably on both front faces, via which the retention elements (10) exert the retention force on the clamping bodies (3).

14. Blocking clutch according to Claim 13, **characterized in that** the retention elements (10) have a guide (10a) for positioning the support (9).

15. Use of a blocking clutch (1) according to any one of Claims 7 to 13 for a drive for raising and lowering a load.

## Revendications

1. Module de transmission protégé contre une réaction pour un moteur destiné à l'entraînement d'une charge exposée à un risque de réaction comprenant
une transmission (11) avec un côté entraînement et un côté entraîné et avec un accouplement de verrouillage (1) présentant un état d'accouplement et un état de verrouillage
dans lequel
l'accouplement de verrouillage inclut un arbre d'entraînement (12),
l'une des extrémités de l'arbre d'entraînement (12) présente des éléments entraîneurs (2) entre lesquels des corps de serrage (3) sont disposés de façon mobile,
les corps de serrage entourent une tête (4) d'un arbre entraîné (13),
la tête (4) de l'arbre entraîné (13) présente des surfaces d'accouplement (5),
un anneau de freinage (6) doté d'une surface de serrage (7) est disposé autour des corps de serrage (3),
à l'état d'accouplement, les surfaces d'accouplement (5) de l'arbre entraîné (13) se trouvent en contact avec les corps de serrage (3), de sorte que, lors d'une rotation de l'arbre d'entraînement (12), un couple est transmis de l'arbre d'entraînement (12) à l'arbre entraîné (13) via les corps de serrage entraînés par les éléments entraîneurs (2), et
à l'état de verrouillage, les surfaces d'accouplement (5) pressent les corps de serrage (3) contre la surface de serrage (7) de l'anneau de freinage (6), lorsqu'un couple externe agit sur l'arbre entraîné,
l'accouplement de verrouillage (1) est disposé du côté entraîné de la transmission (11), de sorte qu'un couple externe est repris par l'accouplement de verrouillage (1) protégeant ainsi la transmission (11) contre l'action du couple externe, et les corps de serrage (3) ainsi que les surfaces d'accouplement (5) sont conformés de façon à ce que, à l'état de verrouillage, une tangente au point de contact A entre respectivement une surface d'accouplement (5) et le corps de serrage (3) adjacent et une tangente au point de contact C entre ce corps de serrage (3) et la surface de serrage (7) comprennent un angle ß d'au moins 5,7°.

2. Module de transmission selon la revendication 1, dans lequel la transmission (11) et l'accouplement de verrouillage (1) sont disposés dans un seul carter (12).

3. Module de transmission selon la revendication 1 ou 2, dans lequel les surfaces d'accouplement (5) ont une forme dans l'ensemble concave, les surfaces d'accouplement (5) dans l'ensemble concaves comprenant de préférence des sections tangentiellement planes.

4. Module de transmission selon l'une des revendications précédentes, dans lequel les corps de serrage (3) et les surfaces d'accouplement (5) sont conformés de façon à ce que, à l'état de verrouillage, une tangente au point de contact A entre respectivement une surface d'accouplement (5) et le corps de serrage (3) adjacent et une tangente au point de contact C entre ce corps de serrage (3) et la surface de serrage (7) comprennent un angle ß d'au moins 7°.

5. Module de transmission selon l'une des revendications précédentes, dans lequel les éléments entraîneurs (2), les corps de serrage (3) et les surfaces d'accouplement (5) sont conformés de façon à ce qu'une tangente au point de contact A entre respectivement une surface d'accouplement (5) et le corps de serrage (3) adjacent et une tangente au point de contact B entre ce corps de serrage (3) et un élément entraîneur (2) comprennent un angle α compris entre 60° et 85°.

6. Module de transmission selon l'une des revendications précédentes, dans lequel l'anneau de freinage (6) entoure un espace intérieur rempli de lubrifiant, dans lequel sont disposés les corps de serrage (3), les éléments entraîneurs (2) et la tête (4) de l'arbre entraîné (13).

7. Accouplement de verrouillage avec un état d'accouplement et un état de verrrouillage comprenant un arbre d'entraînement (12) dont l'une des extrémités présente des éléments entraîneurs (2) entre lesquels des corps de serrage (3) sont disposés de façon mobile lesquels entourent une tête (4) d'un arbre entraîné (13),
dans lequel
la tête (4) de l'arbre entraîné (13) présente des surfaces d'accouplement (5),
un anneau de freinage (6) doté d'une surface de serrage (7) est disposé autour des corps de serrage (3),
à l'état d'accouplement, les surfaces d'accouplement (5) de l'arbre entraîné (13) se trouvent en contact avec les corps de serrage (3), de sorte que, lors d'une rotation de l'arbre d'entraînement (12), un couple est transmis de l'arbre d'entraînement (12) à l'arbre entraîné (13) via les corps de serrage entraînés par les éléments entraîneurs (2), et
à l'état de verrouillage, les surfaces d'accouplement (5) pressent les corps de serrage (3) contre la surface de serrage (7) de l'anneau de freinage (6), lorsqu'un couple externe agit sur l'arbre entraîné,
**caractérisé en ce que**
l'accouplement de verrouillage présente au moins un élément de retenue (10) lequel oppose à la pression dirigée radialement vers l'extérieur exercée par les corps de serrage (3) sur l'anneau de freinage (6) une force de retenue, de sorte que la force de retenue des éléments de retenue doit être surmontée avant que les corps de serrage puissent être pressés contre l'anneau de freinage avec une force suffisante pour l'état de verrouillage.

8. Accouplement de verrouillage selon la revendication 7, **caractérisé en ce que** les éléments de retenue (10) sont fixés respectivement à des éléments entraîneurs voisins.

9. Accouplement de verrouillage selon la revendication 7 ou 8, **caractérisé en ce que** les éléments de retenue (10) sont des ressorts.

10. Accouplement de verrouillage selon la revendication 9, **caractérisé en ce que** les ressorts (10) sont des ressorts à lames.

11. Accouplement de verrouillage selon la revendication 10, **caractérisé en ce qu'**un groupe de ressorts à lames (10) agit sur chaque corps de serrage (3).

12. Accouplement de verrouillage selon l'une des revendications 7 à 11, **caractérisé en ce que** les éléments de retenue (10) sont disposés de sorte que, à l'état de verrouillage, ils sont sollicités par compression.

13. Accouplement de verrouillage selon l'une des revendications 7 à 12, **caractérisé en ce que** les corps de serrage présentent sur au moins l'une des faces frontales, de préférence sur les deux faces frontales, un support (9) par l'intermédiaire duquel les élements de retenue (10) exercent la force de retenue sur les corps de serrage (3).

14. Accouplement de verrouillage selon la revendication 13, **caractérisé en ce que** les éléments de retenue (10) présentent un guidage (10a) pour positionner le support (9).

15. Utilisation d'un accouplement de verrouillage (1) selon l'une des revendications 7 à 13 pour un entraînement destiné à la montée et à la descente d'une charge.
